# EUROPEAN PATENT SPECIFICATION

(11) **EP 3 015 958 B1**
(45) Date of publication and mention of the grant of the patent: **08.08.2018**
(21) Application number: 13888347.5
(22) Date of filing: 26.06.2013
(51) Int. Cl.: G06F 3/03, G06F 3/033

(54) **LIGHT SENSOR ARRAY DEVICE**
LICHTSENSOR-ARRAYVORRICHTUNG
DISPOSITIF DE RÉSEAU DE CAPTEURS DE LUMIÈRE

(43) Date of publication of application: 04.05.2016
(73) Proprietor: Lin, Dai Wei, Shenzhen, Guangdong 518000 (CN); Chang, Yun-Shan, San Jose, California 95135 (US)
(72) Inventor: CHANG, Yun-Shan, San Jose, California 95135 (US)
(74) Representative: Krauns, Christian
(86) International application number: PCT/CN2013/078086
(87) International publication number: WO 2014/205705

(56) References cited:
- CN-A- 1 674 040
- CN-A- 101 111 881
- CN-A- 103 324 304
- CN-U- 203 376 690
- US-A1- 2003 102 425
- US-A1- 2006 226 346
- US-A1- 2010 073 294
- US-B1- 6 344 877
- US-B1- 8 031 176

## Description

### BACKGROUND

### 1. Technical Field

The present invention is generally related to an optical sensor array apparatus and, in particular, to a sensor array apparatus having a plurality of sensor chips arranged in an array.

### 2. Description of Related Art

An optical sensor is a sensing component such as Complementary metal-oxide-semiconductor (CMOS) or Charge-coupled Device (CCD) that converts the received light signals into electric signals. In general, these components may be used to obtain an optical intensity (energy) of a specific light source and therefore determine a distance (as a distance sensor), a change in energy over time, or even be used as component for capturing images.

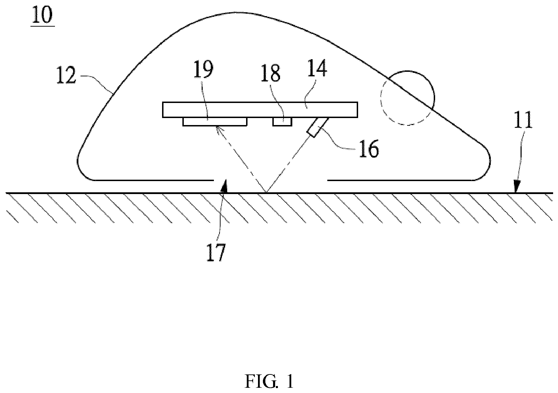

An optical pointing device, such as a computer mouse, may determine a moving track by using an optical sensor. While a light is emitted to an operative surface, a moving vector may be determined by the sensor to collect the energy change within a time slot and to perform image processing. Fig. 1 depicts circuits inside a conventional optical computer mouse. This optical mouse 10 moves over a surface 11. Within its device housing 12, the inner circuits include a circuit board 14 in addition to the essential optics elements. A controller 18 used to control, sense and operate light emission, a light source 16, and a sensor 19 are disposed on the circuit board 14. In the optical mouse 10, an aperture 17 directed to an external surface 11 is formed on its housing 12. The circuit board 14 is disposed near the aperture 17. A light source 16 such as a laser die or LED is disposed onto the circuit board 14. The light source 16 continuously emits lights to the surface 11 at a specific angle while the optical mouse 10 operates. The shown broken line represents the path of the incident light. After the sensor 19 (the sensor 19 may be a CMOS or CCD image sensor) receives signals or energy distribution of reflected light from the surface 11, a controller 18 obtains a moving direction of the optical mouse 10 by analyzing the energy distribution.

The US 2010/073294 A1 discloses a low power image sensor including an image sensing unit which senses light from an object, converts the light into an electric signal, and outputs the electric signal; a comparing unit which receives an electric signal from the image sensor, compares a voltage level of the electric signal with a reference voltage, and outputs an image signal as a 1 bit signal per pixel; and an effective image adjuster which compares bit value distribution of an image signal output from the comparator with a pre-set effective range, and adjusts the effective image to output an effective image. An optical pointing device includes an image sensor which senses light from an object and outputs an image signal; and a motion computing unit which receives the image signal and compares before and after images to calculate a motion vector. The US 6,344,877 B1 discloses an image sensor including one or more dummy pixels that produce a reference signal which is used to compensate for errors within the devices of the main pixel cells. For one example, at least one dummy pixel is used in conjunction with other circuitry to correct for nonlinearities in the transfer characteristic of a source follower transistor within each pixel. For another example, an array of dummy pixels is used to correct for leakage current within the pixels during an electronic shutter mode of operation. The two techniques can be combined whereby both threshold voltage mismatch and leakage current are compensated for.

The conventional technology of determining the moving track of the optical mouse 10 is very dependent on the signal of the reflected light from the surface 11. Therefore, the function of the common optical mouse 10 varies with the form of the surface 11.

During light tracing, the conventional technology may result in a failure in judgment because of a transparent surface structure or a material that is hard to reflect the light, thus causing a failure in light tracing and making the apparatus (e.g. the optical mouse) unable to successfully operate.

In the conventional technologies, in order to enable the devices with the above described sensors to maintain a certain level of ability of tracing the movement, additional external positioning sensors or complicated algorithm are mostly used to acquire the moving tracks. However, these positioning measures or algorithm may be limited to some types of surfaces because of the limitations of sensitivity, high energy consumption, and complexity. These common technologies are not suitable for surfaces with too high or too low reflectivity, or even cannot achieve the light tracing purpose on such surfaces.

### SUMMARY

The invention is set out in the appended set of claims.

### BRIEF DESCRIPTION OF THE DRAWINGS

Fig. 1 shows the inner circuits of the conventional optical mouse;
Fig. 2 shows a schematic diagram of an incident plane and the reflected light paths;
Fig. 3 shows a schematic diagram of a sensor array packaged in one integrated circuit of the optical sensor array apparatus in one embodiment of the present invention;
Fig. 4 shows a schematic diagram of the sensor array adopted by the apparatus in one embodiment of the present invention;
Fig. 5 schematically shows a layout of the sensor cells arranged in an optical sensor array apparatus of the present invention;
Fig. 6 shows circuit blocks depicting the functions of gain control and noise reduction within the optical sensor array apparatus of the present invention;
Fig. 7 shows an exemplary diagram describing the method of light tracing in the sensor cells in one embodiment of the present invention;
Fig. 8 shows another exemplary diagram describing the method of light tracing in the sensor cells in another embodiment of the present invention.

### Major Component Symbol Description

Optical mouse 10
Surface 11
Optical mouse housing 12
Circuit board 14
Controller 18
Light source 16
Sensor 19
Aperture 17
Incident light 201
Surface structure 205
Reflected light 203
Circuit board 30
Sensor array 32
Sensor cell 301
Light source 34
Illumination area 303
Controller 36
Sensor cell 401, 402, 403, 404, 405
Comparator 421, 422, 423, 424, 425
Summator 501
Gain amplifier 502
Calculator 503
Output voltage Vout
Dummy sensor cell 511, 512, 513, 514, 515, 516
Sensor cell 521, 522, 523, 524
Voltage source Vsupply
Light-source component 601
Current limiter 602
Current controller 603
First gain controller 604
Micro-processor 607
Analog-to-digital converter 605
Second gain controller 608
Comparator 609
Light intensity signal 60
Signal line 611, 612, 613, 614
Sensor pixel group 701, 702, 703, 704, 705, 706
Average voltage signal Vavg
Direction X, Y
First time t0
Second time t1
Sensor cell group 801, 802

### DESCRIPTION OF THE EXEMPLARY EMBODIMENTS

Reference will now be made in detail to the exemplary embodiments of the present disclosure, examples of which are illustrated in the accompanying drawings. Wherever possible, the same reference numbers are used in the drawings and the description to refer to the same or like parts.

Disclosure is related to an optical sensor array apparatus, i.e. a sensor array including a plurality of sensor chips arranged in an array. In one embodiment in the disclosure, the sensor array is used to receive reflected lights from a surface and determine constructive or destructive interference patterns from the energies of the reflected lights received by the sensor chips. An energy change within a time slot is calculated to determine a moving vector of the apparatus. When employed in the light pointing device, the sensor array can determine a moving direction of the device relative to the surface.

For example, for the optical computer mouse, a coherent light or a light with good spatial coherence is preferably adopted to determine a moving direction. The determination of the moving direction may be done in cooperation with a scheme of sensitivity compensation and using a movement recognition algorithm for light tracing. Noise can be reduced at the same time. Devices employing this technology can be applied to various type of surfaces.

It is worth noting that a scheme of coherent light source package integration may be utilized in the light tracing apparatus of the disclosed invention. The apparatus utilizing such technology, such as a light pointing device, needs not to be mounted with any additional optical lens or specific image sensor, for example, a CMOS image sensor (CIS).

In view of the fact that the apparatus employing the conventional photo sensor (e.g. optical mouse) is not suitable for use on the surface with high or too low reflectivity, the present invention provides an optical sensor array apparatus having the sensor chips arranged in an array which operate with a corresponding light tracing algorithm to achieve effective light tracing. A light source with great spatial coherence, such as the laser, can be used to provide the apparatus, such as the optical mouse, with good light tracing capability. The present invention conducts the light tracing based on the mentioned optical constructive and destructive interference patterns of the light reflected from the surface.

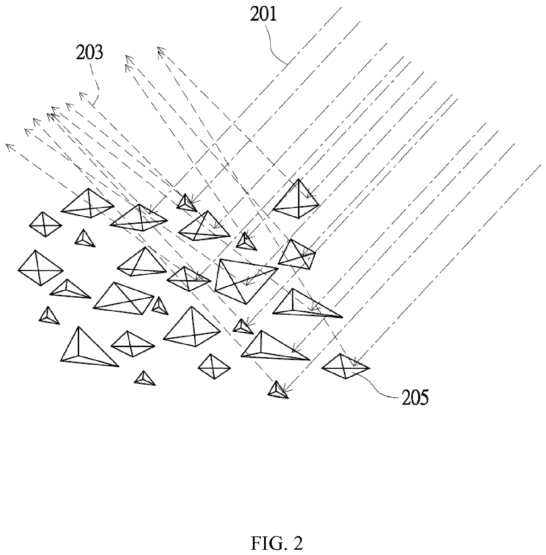

Reference is made to Fig. 2, an incident light 201 generated by a specific light source (not shown) is emitted to a surface and then reflected to form multiple reflected lights 203. In particular, the light source provides a coherent light such as laser. It is noted that the coherent light described herein refers to a light with great spatial coherence.

The multiple light paths shown in Fig. 2 include the paths indicative of incident light 201 emitted to the surface with surface structures 205, and the paths for the reflected lights 203 formed by the reflection of the incident lights 201. Within a microscopic view of field, the surface structures 205 have irregular structures that cause the multi-directional reflected lights 203 as shown in Fig. 2.

The light source continuously generates the incident light 201 to the surface, which are reflected to form the reflected lights 203. During this course, the reflected lights 203 are received at the sensor (not shown) and optical constructive and destructive interference patterns are generated in the light paths. Particularly, the light source is a coherent light source that generates the coherent incident light which results in an enhanced interference effect.

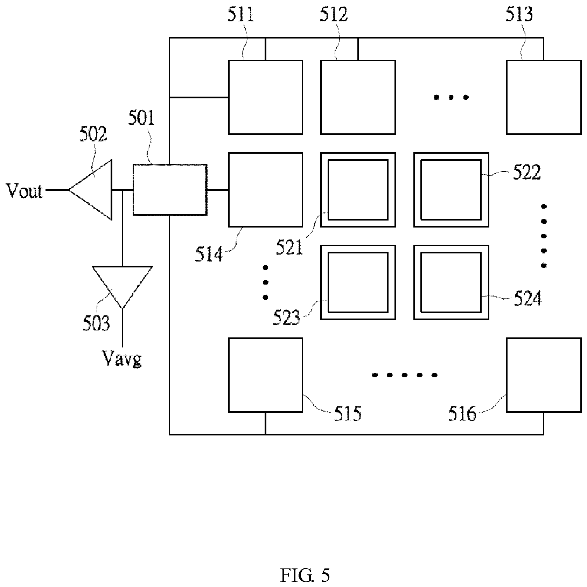

When the apparatus installed with circuits carrying out the mentioned light tracing method moves over a sensing plane (X-Y plane), the photo sensor receives the reflected lights 203. The apparatus then samples signal at a within sampling time slots, obtains average energy of the reflected lights 203, and calculates an energy difference at different times or at different positions. Particularly, the sensor array apparatus according to the disclosure preferably incorporates a sensor array to obtain the energy at the different positions, and the difference between the obtained energy and the average energy. The moving track can therefore be determined. The calculation of the statistic average of the reflected lights 203 may be based on a statistic average of the energy received by all or a part of the sensor cells. For example, a row average (such as the X direction shown in Fig. 5), a column average (such as the Y direction) is taken as a reference for the average calculation. The energy average may also be calculated with reference to the average of energy received by the surrounding sensor cells or central cells.

In one of the embodiments incorporating the sensor array, the interference effect may be enhanced in the case of the coherent light source The coherent light introduces a very small phase delay within a wave envelope. The laser is one type of the coherent light, which is different from a non-coherent light such as sunlight or LED light.

When the coherent light is used in the light tracing apparatus of the present invention, the coherent light can improve sensitivity of the optical sensor for sensing the reflected light interference. The coherent light causes a smaller phase delay when compared to the spatial interference generated by the reflected lights of the non-coherent light because the coherent light is featured by a very small phase difference. The coherent light may therefore advantageously enhance the spatial interference effect of the reflected lights. The above-mentioned sensor array may thus calculate the difference of the spatial interference of the lights reflected from a surface.

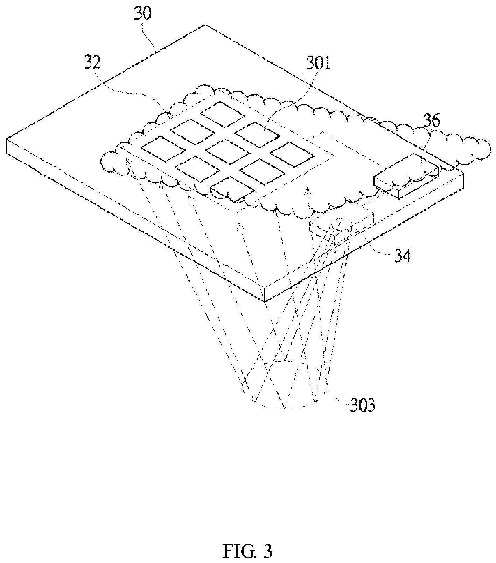

The sensor array such as the sensors shown in Fig. 3 illustrating the sensor array apparatus is packaged into one IC.

Fig. 3 shows a sensor array 32 installed on a circuit board 30 in an optical sensor array apparatus. The optical sensor array apparatus may be used in an optical computer mouse or a specific pointing device. The sensor array 32 includes a plurality of sensor cells 301 arranged in an array. The sensor cells 301 are integrated into an IC by means of an integrated packaging technology. In one embodiment, In particular, the sensor array 32 and the controller 36 integrated in the circuits are fabricated at the same time. The sensor cells 301 (especially the non-dummy sensor cells shown in Fig. 5) of the sensor array 32 may be configured to have a fixed distance and an even relative position between two adjacent sensor cells to allow the sensor array to receive the reflected lights evenly. As shown in Fig. 3, a light source 34 emits a light onto a surface within an illumination area 303 thereof. The light is then reflected from the surface to the sensor array 32, where each sensor cell 301 receives a light with a different direction. A suitable photoelectric signal conversion may be applied to the signals received by the sensor cells 301. After obtaining the signals, a controller 36 that is integrated into an IC together with the sensor array 32, and related circuits may calculate a statistic average of the energy received by the sensor cells 301 by summing up the energy received by all the sensor cells 301, and calculate the difference between the energy received by each sensor cell 301 and the statistic average, thus obtaining the spatial interference difference formed by the lights reflected from the surface. The controller 36 may therefore determine the moving direction based on the multiple spatial interference differences accumulatively calculated within each time slot.

The spatial interface in the mentioned sensor array apparatus refers to a light interference produced when a light (especially, but not limited to, a coherent light) emitted to the surface with irregular surface structures is reflected to generate the reflected lights with different directions. Interaction between the incident light and the reflected lights produces constructive or destructive interference patterns. The sensor array then acquires the spatial information from the interference patterns because of the relative movement (the relative movement between the apparatus and the surface). The information associated to the movement over X-Y plane is therefore established.

As shown in Fig. 3, in one embodiment, the light tracing apparatus of the present invention may be a light pointing device, such as an optical mouse, which uses a laser light as the light source. Circuit elements of the apparatus mainly include a light source 34 disposed on a circuit board 30, for generating an incident light emitted to a surface; a sensor array 32 including multiple sensor cells 301 arranged in an array; and the above-mentioned controller 36. The controller 36 is coupled to the light source 34 and the sensor array 32, for receiving the light signals received by multiple sensor pixels in the sensor cells 301, calculating the energy state of each sensor cell, and calculating a difference of the energy states within the time slot relative to the statistic average energy within the sampling time

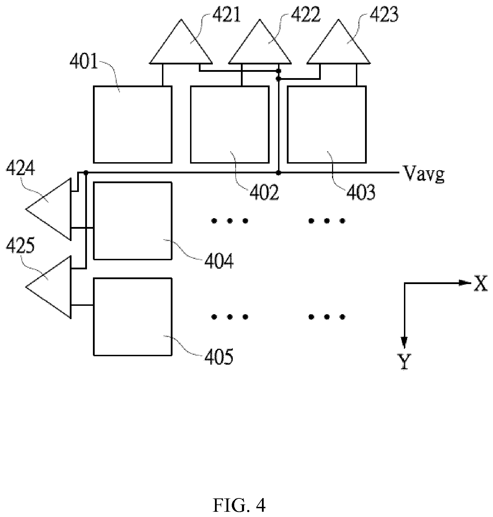

Fig. 4 illustrates the sensor array of the light tracing apparatus that operates to calculate an energy distribution according to one embodiment.

Further, Fig. 4 schematically shows a layout of the sensor array. A plurality of sensor cells is arranged over an X-Y plane to form an "NxM" sensor array. It is noted that the geometric shape of the sensor array may be, but not limited to, symmetric rectangle, square, circle, or oval-shaped. The sensor array includes sensor cells 401, 402, 403, 404, and 405 that are arranged in an array respectively along X and Y directions. It is noted that in practice the number of the cells is not limited to the figure described herein. The circuit board with these sensor pixels 401, 402, 403, 404, and 405 mounted thereon further includes a plurality of comparators 421, 422, 423, 424, and 425. Each of the comparators is associated with a corresponding sensor cell. The input value is the average voltage signal Vavg generated by each sensor cell. The comparator compares the voltage signal generated by the sensor cell after receiving the light, thereby resulting in high or low voltage signal value. Finally, the control circuit acquires the comparisons of the two adjacent sensors to determine the moving direction.

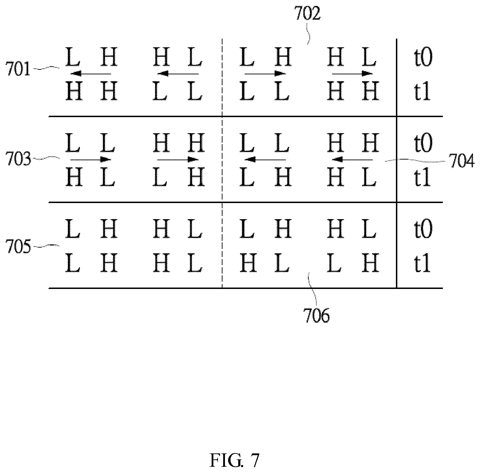

For example, in Fig. 4, the shown comparator 421 is coupled to the sensor cell 401. One input signal is the energy signal generated by the sensor cell 401, which may be indicated by a voltage signal. The other input end receives an average voltage signal Vavg. The comparator 421 compares the two inputs and outputs a comparison result. Preferably, a binary characteristic value (H/L) is used to indicate this comparison result. For example, the high and low voltage signals are respectively represented by the characters H and L as shown in Fig. 7.

According to the optical sensor apparatus of the present invention, the light tracing is characterized by that a moving vector is determined based on a change in the energy distribution of the constructive and destructive interference patterns formed by lights (preferably, coherent lights) reflected by the surface at different times. In an exemplary embodiment, a scheme of non-relative viewpoints is introduced to perform the movement judgment. That is, the scheme incorporates the energy information of the surrounding sensor cells which is compared with the average energy to determine a moving direction. It is noted that, different from the general method for determining the moving vector by using the information extracted from the sensor pixels, the method in accordance with the present invention employs the change of both the time and the energy.

To the optical sensor array apparatus, in one layout of the sensor chip of an exemplary embodiment, the sensor chip includes the sensor cells arranged in an array. The sensor cells may include some inactive sensor cells (referred to as dummy sensor cells) disposed around the chip and centrally located working sensor cells for receiving the lights. Therefore, after the control circuit or the related calculation circuit receives the energy signals from the sensor chip, only the energy signals of the non-dummy sensor cells are adopted for subsequent use. Reference is made to the layout of the sensor cells shown in Fig. 5.

As shown in Fig. 5, one sensor chip includes a plurality of sensor cells arranged into an array. The centrally located sensor cells are surrounded by dummy sensors. The purpose of the disposal of the dummy sensors is to even the whole sensor chip in the manufacturing process, such that the energy can be received evenly by the sensor chip. As shown in Fig. 5, the surrounding sensor cells 511, 512, 513, 514, 515, and 516 are configured to be inactive sensor cells, while the sensor cells 521, 522, 523, and 524 near the central area are the sensing components for mainly receiving the light energy.

When the sensor cells arranged into an array are simultaneously exposed under the reflected lights, the centered cells are those that can evenly sense the lights, and the surrounding sensor cells may possibly receive uneven energy. Therefore, when summing up the energy received by the entire sensor chip, a reference energy value with better reference value can be acquired by excluding the unstable energy values from the dummy sensor cells (511, 512, 513, 514, 515, 516)

As shown in Fig. 5, the circuit includes a summator 501 electrically connected with every sensor cells of the sensor chip. The summator 501 is able to receive the photocurrent from every sensor cell, and performs analog-to-digital conversion to convert the photocurrent signals to voltage signals. However, the photocurrent signal of each sensor cell is very small. A gain amplification process is therefore required to obtain valid reference values, such that the energy change within the time slot can therefore be subsequently calculated. In this embodiment, an output signal, e.g. a voltage signal indicated by Vout, is generated when the photocurrents of the sensor cells are processed by the gain amplifier 502. An average energy output, e.g. an average voltage signal Vavg, can be calculated by a calculator 503 from the valid energy signals

After that, the above-mentioned output signals (such as the output voltage Vout) and the average (such as the average voltage signal Vavg) are outputted to the comparator, e.g. comparator of Fig. 4. The comparator compares the energy signal of the sensor cell and a reference value (such as the average energy from all or part of the sensor cells). Therefore, an energy state for the sensor cell is defined. The energy state of every sensor pixel may be represented by a binary characteristic value "H" abbreviated from high or "L" abbreviated from low.

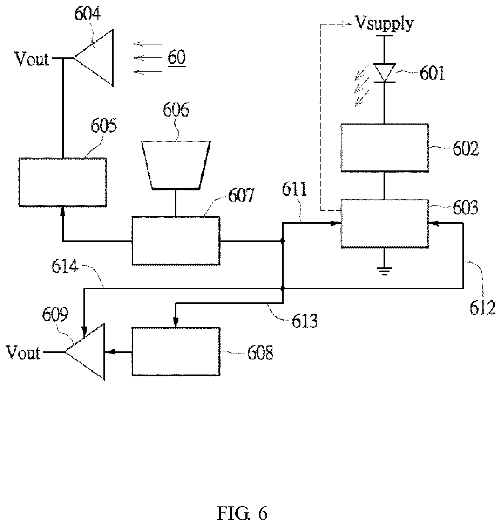

In one further embodiment of the present invention, the circuit also integrates the gain amplifier for amplifying signals (such as the gain amplifier 502) and optionally, a noise-reduction circuit, in addition to the above-described sensor cells arranged in an array, light source, and control circuit disposed in the optical sensor array apparatus. Further reference is made to Fig. 6 showing the circuit blocks depicting the gain controlling and noise reduction within the optical sensor array apparatus.

Fig. 6 schematically shows the control circuit (e.g. the control circuit 36 of Fig. 3) of the optical sensor array apparatus of one embodiment of the present invention. The control circuit includes a voltage source Vsupply which provides power to the light-source component 601 to drive the light-source component 601 to emit lights. The light-source component 601 includes, but not limited to, a laser or a light emitting diode (LED). The laser is a preferable light source to enhance the interference effect since it provides great spatial coherence.

A current limiter 602 may be incorporated to control the electric signals provided to the light-source component 601. Electric signals (such as filtered voltage or current signals) may be fed back to a current controller 603. This current controller 603 operates to manage the voltage or current of the light-source component 601, including limiting the current used to drive the light-source component 601.

While the lights emitted to a surface from the light-source component 601, the sensor array receives the reflected lights. The photo signals are converted to the energy signals after the sensor cells shown in Fig. 4 and Fig. 5 receive the lights.

The sensor array shown in Fig. 5 includes some dummy sensor cells which do not provide energy signals, including energy and change related signals, to be used to determine a moving vector. However, the dummy sensor cells can be used to purely determine the light signals. For example, as shown in Fig. 6, the light intensity signal 60 generated from reflected lights received by the dummy sensor cells may be provided to a first gain controller 604 to adjust the intensity for reference by a micro-processor 607. The dummy sensor cell generates the light intensity signal 60 as the output voltage Vout. This output voltage Vout is then converted to digital signal by a analog-to-digital converter 605. Further, the digital signal is fed back to the micro-processor 607 for adjusting the exposure time of the light-source component 601, and performing the signal gain adjustment and noise reduction of the output signals of the sensor cells.

While the feedback signal for the micro-processor 607 is employed to automatically adjust the exposure time of the light-source component 601, the micro-processor 607 may for example issue a pulse width modulation (PWM) control signal to the current controller 602 over a signal line 611. This control signal is introduced to control the duty cycle thus controlling the emission period of the light-source component 601. Therefore, the adjustment to the exposure time is used to control the apparatus to provide the light signals with appropriate length of time.

In another embodiment, the micro-processor 604 of the control circuit optimizes the light-source component 601 according to the light intensity signal. For example, over the signal line 612, a current control signal is transmitted to the current controller 603 for the purpose of modulating the driving current, thereby adjusting the light intensity generated by the light-source component 601. Therefore, a compensation mechanism may be established by adjusting the light intensity/brightness and the exposure time, which allows the sensor array apparatus to be adapted to various surfaces, for example, with different surface structures and various distances from the apparatus to the surface.

Further, the micro-processor 607 of the control circuit may control the signal gain for every sensor pixel according to the feedback signals from the sensor array. For example, a control signal is transmitted over the signal line 613, and the signal gain for each sensor cell is adjusted by a gain controller 608. The comparator 609 connected with corresponding sensor pixel compares the received energy and the average.

When the light intensity signals of the dummy sensor cells are received by the micro-processor 607, a noise-reduction threshold set in the comparator 609 may be adjusted (based on a control signal transmitted over the signal line 614) so as to dynamically reduce the intrinsic noise of the sensor cell.

The optical sensor array apparatus employs the change of both the time and the energy to determine the relative movement between the apparatus and the surface. The apparatus firstly obtains the energy received by each sensor cell at earlier and later times (t0, t1). A statistic average of the energy received by all or part of the sensor cells at the earlier and later times is then calculated. The change of energy between the earlier and later times can be calculated by comparing the energy value (represented by voltage signal) received by each sensor cell with the average energy. After that, by referring to the energy change of an adjacent sensor cell at different times (t0, t1), the direction of the energy change at the earlier and later times can be determined. At last, an overall moving vector for the apparatus is therefore obtained by referring to the energy change of multiple sensor cells.

The determination of the moving vector may be referred to the light tracing method executed by the multiple sensor cells of the apparatus exemplarily described in Fig. 7.

The exemplary diagram shows a plurality of sensor pixel groups 701, 702, 703, 704, 705, and 706 arranged in an array. It only schematically shows that the moving vector is determined based on the energy change between the adjacent sensor pixels at different times, e.g. first time t0 and second time t1.

The time labels "t0" and "t1" represent the earlier and later sampling times. The labels "H" and "L" respectively represent the high and low voltage signals outputted by the comparator, which are indicative of the energy states (with respect to the average energy). An overall moving vector is determined based on a transition of the voltage signals from the earlier to the later times. Fig. 7 illustrates the energy change of the respective sensor cell at different times..

For example, the sensor cell group 701 includes several (at least two) sensor cells. It is shown at the left side of the diagram that the two sensor cells respectively sense two energy states "L, H" at the first time t0; At the second time t1, the energy states of the two sensor cells change to "H, H". When "L, H" (t0) changes to "H, H" (t1), there is one sensor cell whose energy state changes from L to H, which means the energy state H at the right position shifts to the left position. 7. Therefore, it can be preliminarily determined that the effective moving direction is from right to left within this sampling time slot.

The energy states of another pair of sensor cells in this sensor cell group 701 are "H, L" at the first time t0; Next, at the second time t1, the energy states are transformed to next states "L, L". The energy state of one of the sensor cells is from state "H" to state "L", which means that the energy state "L" at the right position shifts to left position. Therefore, it can be determined that the effective moving direction is from right to left.

For another example, within the sensor cell group 702, the energy states "L, H" of the left two sensor pixels at the first time t0 are transformed to states "L,L" at the second time t1. It can be seen that the energy state "H" at the right position is replaced by the state "L" originally at the left position. It can therefore be determined that the moving vector is from left to right.

Similarly, the energy states of the right two sensor cells in the sensor cell group 702 are "H, L" at the first time t0. At the second time t1, the energy states are transformed to next states "H, H". It shows that the state "L" at the right position is replaced with the state "H" at the left position. It can therefore be determined that the moving vector is from left to right.

There is no arrow indicating the moving direction shown for the sensor cell groups 705 and 706. It is determined that there is no energy change from the first time t0 to the second time t1; or it fails to determine the movement direction based on the energy change. For example, the energy states of the cells in the sensor cell group 706 are "L, H" at the first time t0 and are transformed to "H, L" at the second time t1, and it is unable to determine the moving direction based on such an energy change. Therefore, the sensor cell group 706 does not output any valid signal in these two situations.

After the energy changes of all the sensor cells are determined within the period of sampling time slot, an overall moving vector can be determined.

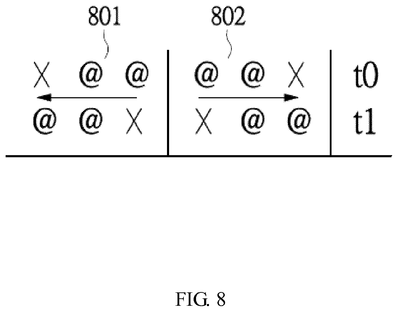

Another manner of determining the moving direction is illustrated in Fig. 8 which depicts the light tracing method executed by the sensor chip of the disclosed apparatus. In this embodiment, the moving vector is determined based on the transition direction of the energy states of the sensor cells at different times. The label "X" indicates a meaningless value; and label "@" represents the comparison between the sensing signals at the time t0 and at the time t1. This embodiment utilizes the change among the labels to determine the moving vector.

Signal energies received by the multiple sensor cells in the sensor chip at different times after the sensor chip receives the reflected lights are compared with an average. The comparison results in high or low voltage signals. For example, the label "@" shown in the Fig. 8 represents the available voltage signal. In some conditions, it is labeled as "X" when there is no energy change or no meaningful voltage signal fluctuation can be found.

In the embodiment shown in Fig. 8, in the sensor cell group 801, the energy change of adjacent sensor cells at the first time t0 obtained by the comparator is labeled as "X@@", where "X" is a meaningless value, "@" represents there is a voltage change. At the second time t1, the energy change of the adjacent sensor cells are labeled as "@@X". In this embodiment, when the energy state "X@@" at the first time t0 are transitioned to the state "@@X" at the second time t1, it can be determined that the label "@@" are shifted leftward. It can therefore be determined that a leftward movement change occurs in the sensor cell group 801 as shown by the arrow in the diagram.

Further, in the sensor cell group 802, the energy state of the adjacent sensor cells at the first time t0 is labeled as "@@X" , and the energy state is "X@@" at the second time t1. As can be seen, after the time changes (from t0 to t1), the label "@@" is rightward shifted. Therefore, the light tracing method of the present invention determines the moving direction of the overall apparatus based on the energy changes within the sampling time period..

It is worth noting that any tiny error occurring in the sensor array incorporated in the apparatus of the present invention does not influence correct determination of the movement. When the light tracing method is applied to an optical computer mouse, the slow change of the reference signals does not influence the overall determination because the shifting rate when the user operates the mouse is far lower than the processing rate of the control circuit within the apparatus.

In summary, the present invention provides an optical sensor array apparatus that is integrated into one semiconductor package. This integration effectively reduces the intrinsic noise inside the apparatus. A compensation mechanism is further provided to dynamically adjust the intensity or brightness of the light source, and adjust the exposure time accordingly. This compensation mechanism allows the sensor array apparatus to adapt to various types of surfaces.

The above-mentioned descriptions represent merely the exemplary embodiment of the present disclosure, without any intention to limit the scope of the present disclosure thereto. Various equivalent changes, alternations or modifications based on the claims of present disclosure are all consequently viewed as being embraced by the scope of the present disclosure.

## Claims

1. An optical sensor array apparatus, comprising:
a plurality of sensor cells arranged in an array to form a sensor array (32) to receive lights reflected from a surface (205);
a plurality of comparators (421, 422, 423, 424, 425);
a light-source component (601) configured to generate a light emitted to the surface (205); and
a control circuit (36), electrically connected to the plurality of sensor cells (301), the comparators (421, 422, 423, 424, 425) and the light-source component (601), **characterized in that**
the sensor array (32) includes multiple dummy sensor cells (511, 512, 513, 514, 515, 516) which are excluded from the cells (301) used to determine a moving vector, wherein each comparator (421, 422, 423, 424, 425) is connected to a corresponding one of the sensor cells and configured to compare two input signals respectively from the each sensor cell (301) and an average calculated from only the energy signals received by all or part of the non-dummy sensor cells;
the control circuit (36) is configured to control the light-source component (601) to emit the light and to receive energy signals from the sensor cells (301), and to determine an energy difference from a spatial interference induced by the reflected lights (203), wherein the control circuit (36) is configured to adjust a driving current for the light-source component (601) so as to adjust the intensity of the light outputted from the light-source component (601) according to light intensity signals received by the dummy sensor cells (511, 512, 513, 514, 515, 516).

2. The apparatus according to claim 1, wherein, the sensor cells (301) have a fixed distance and an even relative position therebetween.

3. The apparatus according to claim 2, wherein the plurality of sensor cells (301) is packaged into one integrated circuit.

4. The apparatus according to claim 1, wherein the control circuit (36) is configured to dynamically adjust an exposure time of the light-source component (601).

5. The apparatus according to claim 4, wherein the light-source component (601) is a coherent light.

6. The apparatus according to claim 4, wherein the light-source component (601) is a laser device.

7. The apparatus according to claim 5, wherein the control circuit (36) is configured to control an emission period of the light-source component (601) by controlling a duty cycle of a pulse width modulation signal.

8. The apparatus according to claim 1, wherein the control circuit (36) is configured to further dynamically adjust a gain of the energy signals outputted from the sensor cells (301).

9. The apparatus according to claim 8, wherein the control circuit (36) is configured to control the gain of each sensor cell according to a feedback energy signal of the sensor array (32) formed by the plurality of sensor cells (301).

10. The apparatus according to claim 1, wherein the dummy sensor cells (511, 512, 513, 514, 515, 516) are disposed at a peripheral area of the sensor array.

## Patentansprüche

1. Vorrichtung zur Anordnung optischer Sensoren, welche aufweist:
eine Vielzahl an Sensorzellen, die in einer Anordnung angeordnet sind, um eine Sensoranordnung (32) zu bilden, um ein von einer Oberfläche (205) reflektiertes Licht zu empfangen,
eine Vielzahl an Komparatoren (421, 422, 423, 424, 425),
eine Lichtquellenkomponente (601), die ausgestaltet ist, um ein Licht zu erzeugen, das zu der Oberfläche (205) emittiert wird, und
eine Steuerschaltung (36), die elektrisch mit der Vielzahl der Sensorzellen (301), der Vielzahl der Komparatoren (421, 422, 423, 424, 425) und der Lichtquellenkomponente (601) verbunden ist, **dadurch gekennzeichnet, dass**
die Sensoranordnung (32) mehrere Dummy-Sensorzellen (511, 512, 513, 514, 515, 516) aufweist, die von den zur Bestimmung eines Bewegungsvektors verwendeten Zellen (301) ausgenommen sind, wobei jeder Komparator (421, 422, 423, 424, 425) mit einer entsprechenden der Sensorzellen verbunden und ausgestaltet ist, um jeweils zwei Eingangssignale von jeder Sensorzelle (301) und einen Durchschnitt zu vergleichen, der nur aus den Energiesignalen berechnet wird, die von allen oder einem Teil des Nicht-Dummy-Sensorzellen empfangen werden,
die Steuerschaltung (36) ausgestaltet ist, um die Lichtquellenkomponente (601) zu steuern, um das Licht zu emittieren und Energiesignale von den Sensorzellen (301) zu empfangen und um eine Energiedifferenz von einer durch das reflektierte Licht induzierten räumlichen Interferenz zu bestimmen (203), wobei die Steuerschaltung (36) ausgestaltet ist, einen Treiberstrom für die Lichtquellenkomponente (601) einzustellen, um die Intensität des von der Lichtquellenkomponente (601) ausgegebenen Lichts gemäß der Signale der Lichtintensität einzustellen, die von den Dummy-Sensorzellen (511, 512, 513, 514, 515, 516) empfangen werden.

2. Vorrichtung nach Anspruch 1, wobei die Sensorzellen (301) einen festen Abstand und eine dazwischen in Bezug darauf gerade Position aufweisen.

3. Vorrichtung nach Anspruch 2, wobei die Mehrzahl der Sensorzellen (301) in einer integrierten Schaltung untergebracht ist.

4. Vorrichtung nach Anspruch 1, wobei die Steuerschaltung (36) ausgestaltet ist, um eine Belichtungszeit der Lichtquellenkomponente (601) dynamisch einzustellen.

5. Vorrichtung nach Anspruch 4, wobei die Lichtquellenkomponente (601) ein kohärentes Licht ist.

6. Vorrichtung nach Anspruch 4, wobei die Lichtquellenkomponente (601) eine Laservorrichtung ist.

7. Vorrichtung nach Anspruch 5, wobei die Steuerschaltung (36) ausgestaltet ist, um eine Emissionsperiode der Lichtquellenkomponente (601) zu steuern, indem ein Tastverhältnis eines Pulsbreitenmodulationssignals gesteuert wird.

8. Vorrichtung nach Anspruch 1, wobei die Steuerschaltung (36) ausgestaltet ist, um eine Verstärkung der von den Sensorzellen (301) ausgegebenen Energiesignale weiter dynamisch einzustellen.

9. Vorrichtung nach Anspruch 8, wobei die Steuerschaltung (36) ausgestaltet ist, um die Verstärkung jeder Sensorzelle gemäß einem Rückkopplungsenergiesignal der Sensoranordnung (32) zu steuern, die durch die Vielzahl der Sensorzellen (301) gebildet worden ist.

10. Vorrichtung nach Anspruch 1, wobei die Dummy-Sensorzellen (511, 512, 513, 514, 515, 516) in einem peripheren Bereich der Sensoranordnung angeordnet sind.

## Revendications

1. Appareil de réseau de capteurs optiques, comprenant :
une pluralité de cellules de capteur agencées selon un réseau pour former un réseau de capteurs (32) pour recevoir des lumières réfléchies par une surface (205) ;
une pluralité de comparateurs (421, 422, 423, 424, 425) ;
un composant de source de lumière (601) configuré pour générer une lumière émise en direction de la surface (205) ; et
un circuit de commande (36), connecté électriquement à la pluralité de cellules de capteur (301), les comparateurs (421, 422, 423, 424, 425) et le composant de source de lumière (601), **caractérisé en ce que**
le réseau de capteurs (32) inclut de multiples cellules de capteur fictives (511, 512, 513, 514, 515, 516) qui sont exclues des cellules (301) utilisées pour déterminer un vecteur en mouvement, dans lequel chaque comparateur (421, 422, 423, 424, 425) est connecté à l'une correspondante des cellules de capteur et configuré pour comparer deux signaux d'entrée respectivement depuis chaque cellule de capteur (301) et une moyenne calculée à partir uniquement des signaux d'énergie reçus par tout ou partie des cellules de capteur non fictives ;
le circuit de commande (36) est configuré pour commander le composant de source de lumière (601) pour émettre la lumière et recevoir des signaux d'énergie depuis les cellules de capteur (301), et déterminer une différence d'énergie à partir d'une interférence spatiale induite par les lumières réfléchies (203), dans lequel le circuit de commande (36) est configuré pour ajuster un courant d'attaque pour le composant de source de lumière (601) de manière à ajuster l'intensité de la lumière produite en sortie par le composant de source de lumière (601) selon des signaux d'intensité de lumière reçus par les cellules de capteur fictives (511, 512, 513, 514, 515, 516).

2. Appareil selon la revendication 1, dans lequel, les cellules de capteur (301) ont une distance fixe et une position relative régulière entre elles.

3. Appareil selon la revendication 2, dans lequel la pluralité de cellules de capteur (301) est emballée dans un seul circuit intégré.

4. Appareil selon la revendication 1, dans lequel le circuit de commande (36) est configuré pour ajuster dynamiquement un temps d'exposition du composant de source de lumière (601).

5. Appareil selon la revendication 4, dans lequel le composant de source de lumière (601) est une lumière cohérente.

6. Appareil selon la revendication 4, dans lequel le composant de source de lumière (601) est un dispositif laser.

7. Appareil selon la revendication 5, dans lequel le circuit de commande (36) est configuré pour commander une période d'émission du composant de source de lumière (601) en commandant un facteur de marche d'un signal de modulation à largeur d'impulsion.

8. Appareil selon la revendication 1, dans lequel le circuit de commande (36) est configuré pour ajuster dynamiquement en outre un gain des signaux d'énergie produits en sortie par les cellules de capteur (301).

9. Appareil selon la revendication 8, dans lequel le circuit de commande (36) est configuré pour commander le gain de chaque cellule de capteur selon un signal d'énergie de rétroaction du réseau de capteurs (32) formé par la pluralité de cellules de capteur (301).

10. Appareil selon la revendication 1, dans lequel les cellules de capteur fictives (511, 512, 513, 514, 515, 516) sont disposées au niveau d'une zone périphérique du réseau de capteurs.
